# EUROPÄISCHE PATENTSCHRIFT

(11) **EP 3 672 837 B1**
(45) Veröffentlichungstag und Bekanntmachung des Hinweises auf die Patenterteilung: **09.08.2023**
(21) Anmeldenummer: 18731054.5
(22) Anmeldetag: 11.06.2018
(51) Int. Cl.: B60R 16/03, B60R 16/023, B62D 5/04, H02P 29/64

(54) **ÜBERTEMPERATUR-MANAGEMENT**
OVERTEMPERATURE MANAGEMENT
GESTION DE TEMPÉRATURE EXCESSIVE

(30) Priorität: 22.08.2017 DE 102017214645
(43) Veröffentlichungstag der Anmeldung: 01.07.2020
(73) Patentinhaber: Robert Bosch GmbH, 70442 Stuttgart (DE)
(72) Erfinder: SEYBOTH, Georg, 70374 Stuttgart (DE); THIELEMANN, Jens, 89558 Böhmenkirch (DE); BEER, Florian, 73525 Schwäbisch Gmünd (DE); KNOEDLER, Andreas, 73574 Iggingen (DE); MANGOLD, Harald, 73463 Westhausen-Lippach (DE)
(86) Internationale Anmeldenummer: PCT/EP2018/065342
(87) Internationale Veröffentlichungsnummer: WO 2019/037918

(56) Entgegenhaltungen:
- EP-A2- 1 057 715
- EP-A2- 2 322 408
- WO-A1-2016/125774
- WO-A2-2012/077304
- DE-A1- 3 429 072
- JP-A- 2001 138 928
- KR-A- 20120 130 654
- US-A1- 2014 081 509
- US-B2- 7 091 686

## Beschreibung

### Stand der Technik

Die vorliegende Erfindung betrifft ein Verfahren zum Vermeiden einer Übertemperatur-Situation eines Fahrzeugs, insbesondere einzelner Bauteile des Fahrzeugs. Im Stand der Technik sind Temperaturmessungen von Bauteilen eines Fahrzeugs bekannt, die eine potenzielle Übertemperatur-Problematik aufweisen. Alternativ können modellbasiert Bauteil-Temperaturen bestimmt werden. Wird eine Übertemperatur festgestellt, wird die Performance verringert und in einem nächsten Schritt das betreffende Bauteil des Fahrzeugs, beispielsweise das Lenksystem, abgeschaltet, um eine Zerstörung von Bauteilen auszuschließen.

In diesem Zusammenhang offenbart beispielsweise die EP 2 322 408 A2 ein Verfahren zum Vermeiden einer Übertemperatur-Situation in einem Fahrzeug, wobei ein Leistungsbudget für ein Bauteil des Fahrzeugs festgelegt und im Betrieb des Fahrzeugs verringert wird.

Ähnliche Verfahren sind auch aus der WO 2012/077304 A2, der DE 34 29 072 A1, der JP 2001-138928 A, der US 7,091,686 B2, der EP 1 057 715 A2, der WO 2016/125774 A1 und/oder der KR 2012-0130654 A bekannt.

### Offenbarung der Erfindung

Die temperaturmäßige Absicherung eines Bauteils eines Fahrzeugs, beispielsweise eines Lenksystems, kann einen hohen gerätetechnischen Aufwand an Temperatursensorik umfassen. Außerdem kann die Modellierung von Temperaturmodellen einen sehr hohen rechentechnischen Aufwand bedeuten.

Eine Aufgabe ist daher, eine sichere Vermeidung einer Überhitzung von Bauteilen eines Fahrzeugs bei einem geringen gerätetechnischen und einem geringen rechentechnischen Aufwand sicherzustellen.

Als erste Ausführungsform der Erfindung wird ein Verfahren zum Vermeiden einer Übertemperatur-Situation eines Fahrzeugs, insbesondere einzelner Bauteile des Fahrzeugs, und vorzugsweise eines Lenksystems, insbesondere einzelner Bauteile des Lenksystems, zur Verfügung gestellt.

Es werden ein erstes und ein zweites Leistungsbudget definiert, wobei das erste Leistungsbudget für eine erste Gruppe von Bauteilen und das zweite Leistungsbudget für eine zweite Gruppe von Bauteilen vorgesehen ist.

Durch die Gruppierung oder Clusterung sich thermisch ähnlich verhaltender Bauteile können geeignete Leistungsbudgets definiert werden.

Das Verfahren umfasst die Schritte: Festlegen eines ersten Leistungsbudgets für ein erstes Bauteil des Fahrzeugs, vorzugsweise des Lenksystems, Auffüllen des ersten Leistungsbudgets und Verringern des ersten Leistungsbudgets im Betrieb des Fahrzeugs, vorzugsweise des Lenksystems.

Zudem werden das erste Leistungsbudget oder Teile daraus zu dem zweiten Leistungsbudget zugeordnet und/oder übertragen.

Werden einzelne Leistungsbudgets nicht aufgebraucht, kann dies dazu führen, dass auch andere Bauteile noch eine relativ niedrige Temperatur aufweisen. Dementsprechend kann deren Leistungsbudget erhöht werden.

Das Verfahren kann beispielsweise auf das Akkumanagementsystem oder vorzugsweise das Lenksystem eines Fahrzeugs angewandt werden. Insbesondere kann das Verfahren für elektronische Systeme des Fahrzeugs eingesetzt werden.

Beispielhafte Ausführungsformen werden in den abhängigen Ansprüchen beschrieben.

Gemäß einer beispielhaften Ausführungsform der Erfindung wird ein Verfahren zur Verfügung gestellt, umfassend den Schritt: falls das erste Leistungsbudget einen Grenzwert erreicht: Abschalten des ersten Bauteils.

In einer weiteren erfindungsgemäßen Ausführungsform wird ein Verfahren zur Verfügung gestellt, umfassend den zusätzlichen Schritt: Leistungsreduktion oder Abschalten des ersten Bauteils und/ oder anderer Baugruppen zur Reduktion der thermischen Energieeinbringung in das erste Bauteil.

Durch die Abschaltung der thermischen Energiequelle oder anderer Komponenten, die thermische Energie in das Bauteil einbringen, kann eine Überhitzung und damit Zerstörung des Bauteils verhindert werden.

In einer weiteren erfindungsgemäßen Ausführungsform wird ein Verfahren zur Verfügung gestellt, umfassend den Schritt: Festlegen eines zweiten Leistungsbudgets für ein zweites Bauteil.

Gemäß einer beispielhaften Ausführungsform der Erfindung wird ein Verfahren zur Verfügung gestellt, wobei die Elemente der ersten Gruppe gleichartig sind, beispielsweise nur Kondensatoren oder nur Power-Mosfets umfassen.

Gemäß einem weiteren Ausführungsbeispiel der vorliegenden Erfindung wird ein Verfahren zur Verfügung gestellt, wobei sich der Schritt des Verringerns nach dem Moment und der Drehzahl eines Lenkantriebs des Fahrzeugs richtet.

In einer weiteren erfindungsgemäßen Ausführungsform wird ein Verfahren zur Verfügung gestellt, umfassend den Schritt: bei Erreichen eines Grenzwerts des ersten und/oder zweiten Leistungsbudgets: Erzeugen einer Mitteilung über das Erreichen des Grenzwerts und/oder Wechseln des Betriebszustandes von einem hochautonomen Fahren zu einem konventionellen Fahren oder andersherum.

Das Verfahren kann auf das Lenksystem oder ein anderes Steuergerät oder ein elektronisches System des Fahrzeugs angewandt werden. Bei Erreichen des Grenzwerts des Leistungsbudgets kann ein Wechsel des Betriebszustandes eingeleitet werden, beispielsweise kann der Fahrer aufgefordert werden, wieder die Kontrolle des Fahrzeugs zu übernehmen, da die Leistungsreserve des Lenksystems zum automatisierten Fahren aufgebraucht ist.

Gemäß einem weiteren Ausführungsbeispiel der vorliegenden Erfindung wird ein Verfahren zur Verfügung gestellt, wobei das erste und/oder zweite Leistungsbudget abhängig vom aktuellen Leistungsbudgetverbrauch wieder aufgefüllt wird und/oder wobei das Leistungsbudget abhängig von System und/oder Umgebungsbedingungen variiert wird.

Unterschiedliche Lastfälle sind durch Drehzahl und Drehmoment des Lenkantriebs des Lenksystems des Fahrzeugs charakterisiert. Eine hohe Drehzahl und ein hohes Moment haben eine hohe Leistungsaufnahme zur Folge. Für ein erstes Leistungsbudget wird der Verbrauch des Leistungsbudgets durch die Leistungsaufnahme bestimmt und für ein zweites Leistungsbudget wird der Verbrauch des Leistungsbudgets durch hohes Drehmoment bei geringer Drehzahl bestimmt.

In einer weiteren erfindungsgemäßen Ausführungsform wird ein Verfahren zur Verfügung gestellt, wobei das Verfahren zum hochautomatisierten oder voll automatisierten Fahren verwendet wird.

In einer weiteren erfindungsgemäßen Ausführungsform wird ein erstes Leistungsbudget auf zwei Weisen aufgebraucht: Verbrauch durch hohes Drehmoment und geringer Drehzahl oder durch hohe Leistungsaufnahme.

Als eine Idee der Erfindung kann angesehen werden, ein Leistungsintegral zu bestimmen, das als Leistungsbudget für die Leistungsentnahme zu verstehen ist. Die Leistungsentnahme entspricht der Erhitzung der Bauteile. Wird das Leistungsbudget ausgeschöpft, kann von einer Überhitzung ausgegangen werden.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 ein Flussdiagramm mit einem erfindungsgemäßen Ablauf, wobei ein Leistungsbudget, das einer Wärmeentwicklung entspricht, aufgeladen und wieder entladen wird,
Fig. 2 ein Flussdiagramm mit einer Unterscheidung der Leistungsaufnahme und
Fig. 3 ein Ablauf eines alternativen Verfahrens.

### DETAILLIERTE BESCHREIBUNG BEISPIELHAFTER AUSFÜHRUNGSFORMEN

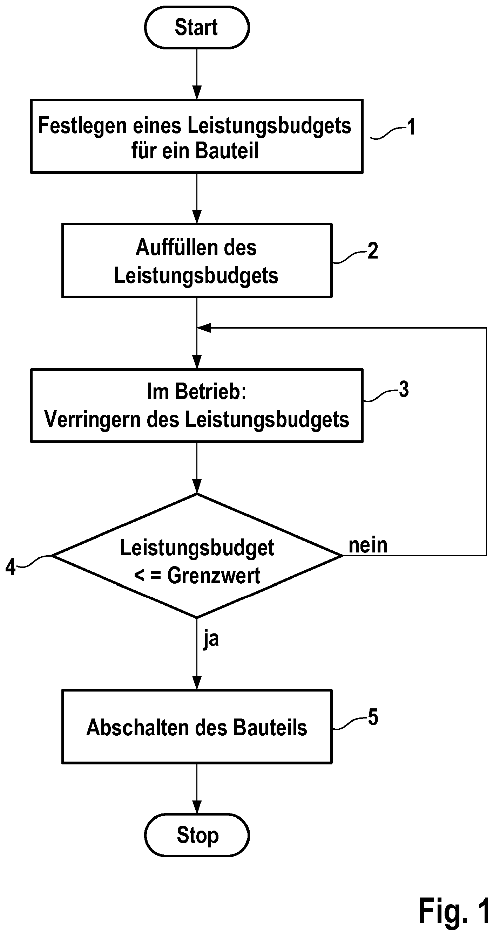

Fig. 1 zeigt ein Flussdiagramm mit einem erfindungsgemäßen Ablauf, wobei ein Leistungsbudget definiert wird 1, das im Betrieb nach und nach verringert werden kann, einfach dadurch, dass sich eine Wärmeentwicklung ergibt 3. Ist das vordefinierte Leistungsbudget gleich einem Limit oder sogar darunter 4, bedeutet das, dass sich eine zu große Temperatur ergeben hat, und das oder die betroffenen Bauteile müssen abgeschaltet werden 5, um eine Beschädigung zu verhindern. Zu Beginn des Ablaufs kann das Leistungsbudget aufgefüllt werden 2, wobei die bauelementetypischen Charakteristika zu berücksichtigen sind. Fig. 1 zeigt ein Festlegen eines Leistungsbudgets für ein Bauteil 1, ein Auffüllen des Leistungsbudgets 2, im Betrieb: Verringern des Leistungsbudgets 3, einen Vergleich Leistungsbudget <= Grenzwert 4 und ein Abschalten des Bauteils 5 bei festgestellter Überhitzung. Das Bauteil ist ein solches eines Fahrzeugs, beispielsweise eines Lenksystems.

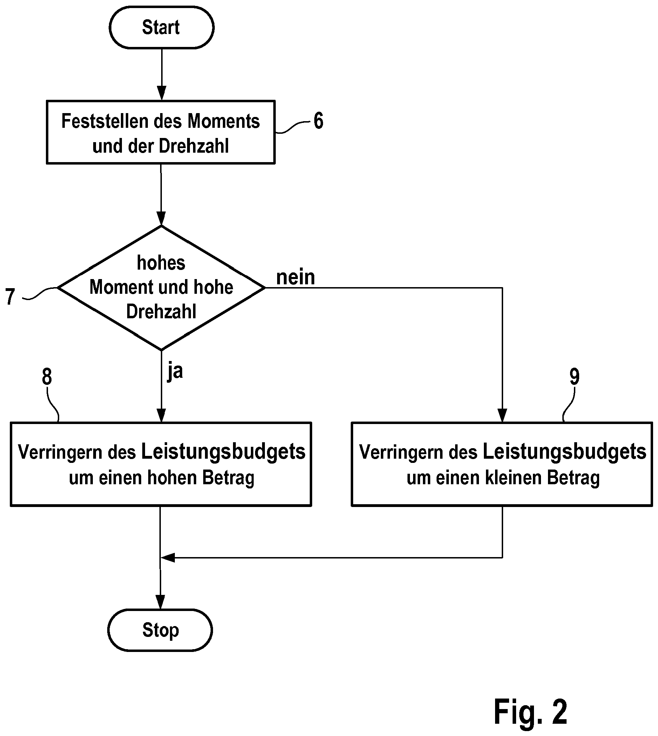

Fig. 2 zeigt ein Flussidagramm bei dem zunächst das Drehmoment und die Drehzahl des Lenkantriebs festgestellt wird 6. Liegt ein hohes Moment und eine hohe Drehzahl vor 7, wird ebenfalls schnell die Temperatur der betreffenden Bauteile erhöht. Bei einem hohen Moment und einer hohen Drehzahl wird ein zuvor definiertes Leistungsbudget schneller aufgebraucht, insbesondere mittels Verringern des Leistungsbudgets um einen hohen Betrag 8, als im anderen Fall, bei welchem das Leistungsbudget um einen kleinen Betrag 9 und/oder einen im Vergleich zu dem hohen Betrag geringeren Betrag verringert wird. Fig. 2 zeigt ein Feststellen des Moments und der Drehzahl 6, eine Überprüfung, ob ein hohes Moment und hohe Drehzahl vorliegt 7, ein Verringern des Leistungsbudgets um einen hohen Betrag 8 und ein Verringern des Leistungsbudgets um einen kleinen Betrag 9.

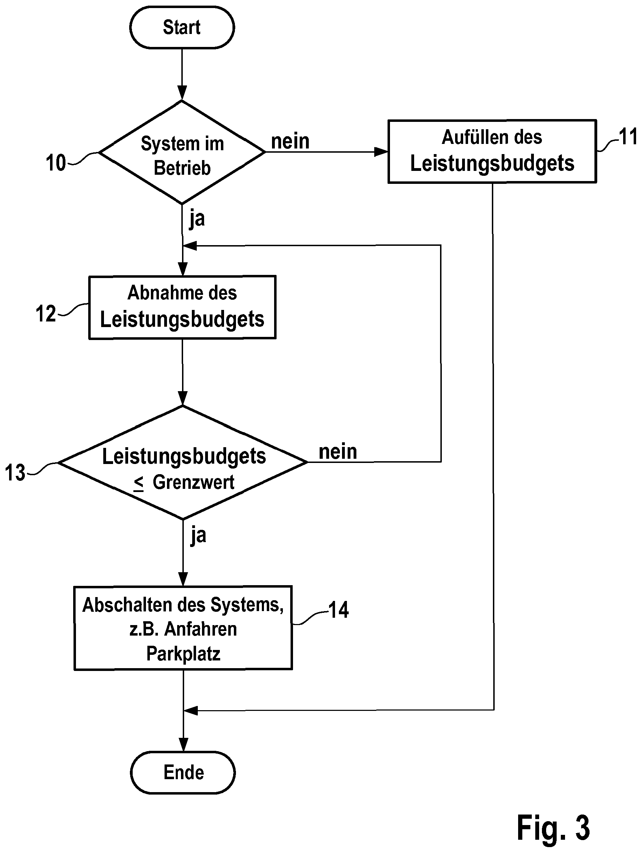

Fig. 3 zeigt einen alternativen Ablauf mit einem erfindungsgemäßen Leistungsbudget, wobei das Leistungsbudget die maximal abzugebende Leistung mittels eines Leistungsintegrals definiert. Das Leistungsbudget wird bei Leistungsentnahme verringert 12, wobei das Leistungsbudget in dem Zeitraum, in dem keine Leistungsentnahme stattfindet, wieder aufgefüllt werden kann 11. Die Füllrate und das maximale Leistungsbudget können abhängig von System- und Umgebungsbedingungen, insbesondere der Umgebungstemperatur, angepasst werden. Wird durch das Leistungsbudget ein Grenzwert unterschritten 13, kann die Beendigung des automatisierten Betriebs eingeleitet werden. Die Grenze sollte derart festgelegt werden, dass eine Restbetriebsdauer ermöglicht wird, die beispielsweise das Anfahren eines Parkplatzes erlaubt 14. Liegen mehrkanalige Lenksysteme vor, können die Leistungsbudgets zwischen den Teilsystemen koordiniert und nötigenfalls umverteilt werden, um eine Deaktivierung durch sanfte Reduktion und ausreichende Vorwarnzeit zu ermöglichen. Das Leistungsbudget und/oder das Leistungsintegral stellt sozusagen ein Modell dar, das eine Wandlung elektrischer Energie in thermische Energie zur Verfügung stellt. Der Leistungsbudgetverbrauch kann sich aufgrund von mechanischer Leistung, Batterie- oder Phasenstrom ergeben. Fig. 3 zeigt eine Überprüfung, ob das System im Betrieb ist 10, ein Auffüllen des Leistungsbudgets 11, eine Abnahme des Leistungsbudgets 12, ein Vergleich Leistungsbudget <= Grenzwert 13 und ein Abschalten des Systems, z.B. Anfahren Parkplatz 14. Das System ist ein solches eines Fahrzeugs, beispielsweise ein Lenksystem oder ein elektronisches System.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Verfahren, das auf das Lenksystem oder ein anderes Steuergerät oder ein elektronisches System des Fahrzeugs angewandt wird, zum Vermeiden einer Übertemperatur-Situation eines Fahrzeugs, insbesondere einzelner Bauteile des Fahrzeugs, wobei ein erstes und ein zweites Leistungsbudget definiert werden, wobei das erste Leistungsbudget für ein erstes Bauteil und/oder eine erste Gruppe von Bauteilen und das zweite Leistungsbudget für ein zweites Bauteil und/oder eine zweite Gruppe von Bauteilen vorgesehen ist, umfassend die Schritte:
Festlegen eines ersten Leistungsbudgets für ein erstes Bauteil des Fahrzeugs (1),
Auffüllen des ersten Leistungsbudgets (2) und
Verringern des ersten Leistungsbudgets im Betrieb des Fahrzeugs (3),
**gekennzeichnet durch** den Schritt:
Zuordnen und/oder Übertragen des ersten Leistungsbudgets oder Teile daraus zu dem zweiten Leistungsbudget.

2. Verfahren nach Anspruch 1, umfassend den Schritt:
falls das erste Leistungsbudget einen Grenzwert erreicht: Abschalten des ersten Bauteils (5).

3. Verfahren nach einem der Ansprüche 1 oder 2, umfassend den zusätzlichen Schritt:
Leistungsreduktion oder Abschalten des ersten Bauteils und/oder anderer Baugruppen zur Reduktion der thermischen Energieeinbringung in das erste Bauteil.

4. Verfahren nach einem der vorhergehenden Ansprüche, umfassend den Schritt:
Festlegen eines zweiten Leistungsbudgets für ein zweites Bauteil.

5. Verfahren nach einem der vorhergehenden Ansprüche, wobei die Elemente der ersten Gruppe gleichartig sind, beispielsweise nur Kondensatoren oder nur Power-Mosfets.

6. Verfahren nach einem der vorhergehenden Ansprüche, wobei sich der Schritt des Verringerns nach dem Moment und der Drehzahl eines Lenkantriebs des Fahrzeugs richtet.

7. Verfahren nach einem der vorhergehenden Ansprüche, umfassend den Schritt: bei Erreichen eines Grenzwerts des ersten und/oder zweiten Leistungsbudgets: Erzeugen einer Mitteilung über das Erreichen des Grenzwerts und/oder Wechseln des Betriebszustandes von einem hochautonomen Fahren zu einem konventionellen Fahren oder andersherum.

8. Verfahren nach einem der vorhergehenden Ansprüche, wobei das erste und/oder zweite Leistungsbudget abhängig vom aktuellen Leistungsbudgetverbrauch wieder aufgefüllt wird und/oder wobei das Leistungsbudget abhängig von System- und/oder Umgebungsbedingungen variiert wird.

9. Verfahren nach einem der vorhergehenden Ansprüche, wobei das Verfahren zum hochautomatisierten oder voll automatisierten Fahren verwendet wird.

## Claims

1. Method, applied to the steering system or another control unit or an electronic system of the vehicle, for avoiding an overtemperature situation in a vehicle, in particular individual components of the vehicle, wherein a first and a second power budget are defined, wherein the first power budget is provided for a first component and/or a first group of components and the second power budget is provided for a second component and/or a second group of components, comprising the steps of:
stipulating a first power budget for a first component of the vehicle (1),
replenishing the first power budget (2) and
decreasing the first power budget during operation of the vehicle (3),
**characterized by** the step of:
assigning and/or transferring the first power budget or parts thereof to the second power budget.

2. Method according to Claim 1, comprising the step of:
if the first power budget reaches a limit value: switching off the first component (5).

3. Method according to either of Claims 1 and 2, comprising the additional step of:
reducing the power of or switching off the first component and/or other assemblies in order to reduce the input of thermal energy into the first component.

4. Method according to one of the preceding claims, comprising the step of:
stipulating a second power budget for a second component.

5. Method according to one of the preceding claims, wherein the elements in the first group are of the same type, for example only capacitors or only power MOSFETs.

6. Method according to one of the preceding claims, wherein the decreasing step is geared to the moment and the number of revolutions per minute of a steering drive of the vehicle.

7. Method according to one of the preceding claims, comprising the step of: when a limit value for the first and/or second power budget is reached: producing a message about the limit value having been reached and/or changing the operating state from highly autonomous driving to conventional driving or vice versa.

8. Method according to one of the preceding claims, wherein the first and/or second power budget is topped up on the basis of the present power budget consumption and/or wherein the power budget is varied on the basis of system and/or environmental conditions.

9. Method according to one of the preceding claims, wherein the method is used for highly automated or fully automated driving.

## Revendications

1. Procédé appliqué à un système de direction ou à un autre appareil de commande ou à un système électronique d'un véhicule afin d'éviter une situation de température excessive du véhicule, en particulier de composants individuels du véhicule, dans lequel un premier et un deuxième budget de puissance sont définis, dans lequel le premier budget de puissance est prévu pour un premier composant et/ou un premier groupe de composants et le deuxième budget de puissance est prévu pour un deuxième composant et/ou un deuxième groupe de composants, comprenant les étapes consistant à :
fixer un premier budget de puissance pour un premier composant du véhicule (1),
approvisionner le premier budget de puissance (2), et
diminuer le premier budget de puissance en cours de fonctionnement du véhicule (3),
**caractérisé par** l'étape consistant à :
affecter et/ou transférer le premier budget de puissance ou des parties de celui-ci au deuxième budget de puissance.

2. Procédé selon la revendication 1, comprenant l'étape consistant à :
si le premier budget de puissance atteint une première valeur seuil : déconnecter le premier composant (5).

3. Procédé selon l'une quelconque des revendications 1 ou 2, comprenant l'étape supplémentaire consistant à :
réduire la puissance ou déconnecter le premier composant et/ou d'autres sous-ensembles afin de réduire l'apport en énergie thermique au premier composant.

4. Procédé selon l'une quelconque des revendications précédentes, comprenant l'étape consistant à :
fixer un deuxième budget de puissance pour un deuxième composant.

5. Procédé selon l'une quelconque des revendications précédentes, dans lequel les éléments du premier groupe sont similaires, par exemple uniquement des condensateurs ou uniquement des MOSFET de puissance.

6. Procédé selon l'une quelconque des revendications précédentes, dans lequel l'étape de diminution dépend du couple et de la vitesse de rotation d'un entraînement de direction du véhicule.

7. Procédé selon l'une quelconque des revendications précédentes, comprenant l'étape consistant à : lorsqu'une valeur limite du premier et/ou du deuxième budget de puissance est atteinte : générer un message indiquant que la valeur limite est atteinte et/ou modifier l'état de fonctionnement d'une conduite hautement autonome en conduite conventionnelle ou vice versa.

8. Procédé selon l'une quelconque des revendications précédentes, dans lequel le premier et/ou le deuxième budget de puissance sont réapprovisionnés en fonction de la consommation de budget de puissance actuelle, et/ou dans lequel le budget de puissance varie en fonction des conditions du système et/ou de l'environnement.

9. Procédé selon l'une quelconque des revendications précédentes, dans lequel le procédé est utilisé pour la conduite hautement automatisée ou entièrement automatisée.
